# EUROPÄISCHE PATENTSCHRIFT

(11) **EP 4 367 698 B1**
(45) Veröffentlichungstag und Bekanntmachung des Hinweises auf die Patenterteilung: **18.06.2025**
(21) Anmeldenummer: 22747287.5
(22) Anmeldetag: 03.07.2022
(51) Int. Cl.: H01H 9/54, H01H 33/59, H02H 7/26, H02H 3/087, H02H 3/33

(54) **GLEICHSPANNUNGSSCHALTGERÄT MIT ERDSCHLUSSSCHUTZ**
DC VOLTAGE SWITCHING DEVICE HAVING EARTH FAULT PROTECTION
APPAREIL DE COMMUTATION À TENSION CONTINUE POURVU D'UNE PROTECTION CONTRE LES DÉFAUTS À LA TERRE

(30) Priorität: 05.07.2021 BE 202105522
(43) Veröffentlichungstag der Anmeldung: 15.05.2024
(73) Patentinhaber: PHOENIX CONTACT GMBH & CO. KG, 32825 Blomberg (DE)
(72) Erfinder: GROTE, Tobias, 32676 Lüdge (DE); HEUER, Lutz, 32825 Blomberg (DE); SCHÜRGENS, Detlev, 32825 Blomberg (DE)
(74) Vertreter: Blumbach · Zinngrebe Patentanwälte PartG mbB
(86) Internationale Anmeldenummer: PCT/EP2022/068358
(87) Internationale Veröffentlichungsnummer: WO 2023/280729

(56) Entgegenhaltungen:
- EP-A1- 3 723 223
- WO-A1-2020/193167
- WO-A1-2020/193168

## Beschreibung

### Beschreibung

Die Erfindung betrifft ein Gleichspannungsschaltgerät mit Erdschlussschutz, insbesondere ein Gleichspannungsschaltgerät zum Koppeln einer Gleichspannungslast über einen Plusleiter und Minusleiter an eine Gleichspannungsquelle.

Aus dem Stand der Technik ist es grundsätzlich bekannt, zum elektrischen Koppeln von Gleichspannungslasten an Gleichspannungsquellen Gleichspannungsschaltgeräte einzusetzen. Hierbei können sowohl ein Plusleiter und ein Minusleiter, über welche die Gleichspannungslast an die Gleichspannungsquelle gekoppelt wird, durch das Gleichspannungsschaltgerät geführt sein. Im Rahmen der Erfindung muss die Gleichspannungslast keine einzelne Last sein, sondern kann sich auch aus einer Gruppe von Gleichspannungslasten zusammensetzen oder als ein Gleichstromnetz ausgebildet sein, mit einer Vielzahl von darüber betriebenen Gleichspannungslasten. Solche Gleichspannungsschaltgeräte zum elektrischen Koppeln von Gleichspannungslasten an Gleichspannungsquellen gewinnen immer mehr an Bedeutung, insbesondere auf Fabrikebene und/oder bei der Umsetzung intelligenter Netze, da ein übergeordnetes Energiemanagementsystem für die wirtschaftliche und die energetische Optimierung des elektrisch gekoppelten Gleichstromnetzes einfach integriert werden kann und vordefinierte Strom-Spannungs-Kennlinien in den folglich enthaltenen Gleichspannungsgeräten für den sofortigen Ausgleich von Leistungsbedarf und Leistungsangebot sorgen können. Darüber hinaus können viele Komponenten, die bei Wechselstrom benötigt werden, bei Gleichstrom entfallen. Die Vorteile einer Gleichstrom-Versorgung (DC-Versorgung) für Industrie-Anlagen liegen daher auf der Hand. Im Rahmen der Erfindung kann eine an eine Gleichspannungsquelle jeweils elektrische koppelbare Gleichspannungslast folglich insbesondere auch eine logische Einheit bilden und/oder Komponenten mit starken funktionalen Abhängigkeiten zueinander besitzen und/oder Zwischenkreiskapazitäten beinhalten, um schaltfrequente Ausgleichsvorgänge zwischen einzelnen Geräten von der Gleichspannungsquelle bzw. der DC-Versorgung fern zu halten, und/oder über ein Gleichspannungsschaltgerät an die

Gleichspannungsquelle bzw. die DC-Versorgung elektrisch gekoppelt sein. EP3723223 A1 offenbart einen solchen Gleichspannungsschalter gemäß des Oberbegriffs des Anspruchs 1.

Insbesondere bei Netzformen, bei denen das Erdpotential nicht von den aktiven Leitern isoliert ist (z.B. TN-Netz), muss bei einem Erdschluss der Fehlerort vom Rest des Netzes getrennt werden. Bei ausreichender Niederohmigkeit kann ein Erdschluss z.B. zu einem Erdschlussstrom führen, der eine vorgeschaltete Sicherung zum Ansprechen bringt.

Aufgabe der Erfindung ist es, auf eine neue und einfache Weise eine Erdschlussüberwachung beim elektrischen Koppeln einer Gleichspannungslast an eine Gleichspannungsquelle zu schaffen, welche mit einer geringen Anzahl von Komponenten auskommt

Die Lösung gemäß Erfindung ist durch ein Gleichspannungsschaltgerät und ein Schaltsystem mit den Merkmalen gemäß anhängendem Anspruch 1 bzw. 9 gegeben. Demgemäß ist ein Gleichspannungsschaltgerät zum Koppeln einer Gleichspannungslast über einen Plusleiter und Minusleiter an eine Gleichspannungsquelle vorgeschlagen, wobei der Plusleiter und der Minusleiter durch das Gleichspannungsschaltgerät geführt sind, wobei das Gleichspannungsschaltgerät ein erstes Schaltelement zum Ankoppeln und Abkoppeln der Gleichspannungslast besitzt, welches ein in den Plusleiter oder in den Minusleiter integriertes, halbleiterbasiertes, elektronisch steuerbares Schaltelement ist, sowie eine in dem jeweils anderen Leiter integrierte Sicherung besitzt und einen Sensor zumindest zum Erfassen des Stromflusses des Leiters, in welchem das erste Schaltelement integriert ist. Ferner besitzt das Gleichspannungsschaltgerät eine mit dem Sensor und dem ersten Schaltelement verbundene Auswertevorrichtung, die eingerichtet ist zum Vergleichen des erfassten Stromflusses gegenüber einem Schwellwert und zum Ansteuern des ersten Schaltelements zum Abkoppeln der Gleichspannungslast bei Durchschreiten des Schwellwertes.

Ein wesentlicher Vorteil der Erfindung ist folglich darin zu sehen, dass auch bei einem Erdschluss eine Trennung des Fehlerorts vom Rest des Netzes sehr schnell, insbesondere innerhalb weniger µs erfolgen kann, damit der abzuschaltende Strom nicht zu hoch wird. Das Halbleiterschaltelement kann somit den Leiter, in welchen dieses integriert ist, in wenigen µs abschalten und somit die Gleichspannungsquelle vom Fehlerort trennen bevor der Strom zu groß wird. Sicherungen mit ausreichender Kurzschlussfestigkeit sind verfügbar, sodass auch der Leiter, in welchen diese integriert ist ausreichend schnell getrennt werden kann. Haben also sowohl der Pluspol als auch der Minuspol eine Spannung gegenüber Erdpotential, die im Erdschlussfall in einen sehr großen Fehlerstrom resultieren würde, besitzt das Gleichspannungsschaltgerät gemäß Erfindung sowohl im Pluszweig als auch im Minuszweig eine Möglichkeit auch bei einem solchen Fehler sicher zu trennen. Da für das betriebliche Schalten in der Regel ohnehin ein steuerbares Halbleiterschaltelement in einem Zweig (Plus oder Minus) benötigt wird, kann dieses Schaltelement auch für den Erdschlussschutz für diesen Zweig verwendet werden. Dazu wird ein Sensor benötigt, der zumindest den Stromfluss dieses Leiters erfasst, wobei die Auswertevorrichtung, z.B. ein µC (Mikrocontroller) das Sensorsignal auswertet und bei Durchschreiten des Schwellwertes das Halbleiterschaltelement abschaltet. Das Schaltelement, der Sensor und die Auswerteeinrichtung bilden somit zusammen insbesondere auch den Erdschlussschutz für den entsprechenden Leiter.

In dem anderen Zweig kann eine Sicherung zum Erdschlussschutz verwendet werden. Zum einen wird für das betriebliche Schalten kein weiteres Halbleiterschaltelement benötigt, wodurch auch ein Stromsensor in dem Zweig mit der Sicherung nicht zwingend notwendig ist und entsprechend auch keine Auswertung und keine Ansteuerung für diesen Zweig benötigt wird. Des Weiteren ist die Verlustleistung der Sicherung wesentlich geringer, weshalb eine aufwendige Kühlung, wie sie in der Regel für das Halbleiterschaltelement benötigt wird, entfallen kann. Entsprechend ergeben sich auch Kostenvorteile durch die Verwendung einer Sicherung.

Mit einem solchen Gleichspannungsschaltgerät lässt sich ferner insbesondere ein Schaltsystem umsetzen, bei welchem an einem Eingang des Gleichspannungsschaltgerätes der Plusleiter und der Minusleiter an ein gleichgerichtetes dreiphasiges AC-Netz oder an einen Gleichspannungsbus als Gleichspannungsquelle angeschlossen sind und an einem Ausgang des Gleichspannungsschaltgerätes über den Plusleiter und den Minusleiter ein Gleichspannungszweig mit der Gleichspannungslast an- und abkoppelbar ist.

In einer ersten Ausführung besitzt der Sensor gemäß Erfindung zweckmäßig ein in Serie mit dem ersten Schaltelement angeordnetes Sensorelement zum Erfassen des Stromflusses. In ergänzender oder alternativer Ausführung ist ein Sensor zum Erfassen des Stromflusses beider Leiter angeordnet und eingerichtet, insbesondere zum Erfassen eines den Differenzstrom oder Summenstrom aus Plus- und Minusleiter bildenden Stromflusses. Bei der Erfassung eines den Differenzstrom bildenden Stromflusses oder Summenstrom. Bei dieser Ausführung kann folglich das in Serie mit dem ersten Schaltelement angeordnete Sensorelement auch entfallen und/oder es kann auch ein in Reihe zur Sicherung geschaltetes Sensorelement vorhanden sein und/oder das Erfassen eines Differenzstroms oder Summenstroms als Stromfluss kann z.B. auch mittels eines Sensorelements erfolgen, das zum Erfassen eines sich insgesamt um den Plusleiter und Minusleiter herum ausbildenden Magnetfeldes eingerichtet ist, wie z.B. in der von der Anmelderin vorliegender Anmeldung am 5. Juli 2021 bei der belgischen Anmeldebehörde eingereichten Anmeldung Nr. BE2021/5520 mit dem Titel "Fehlerstromüberwachung für einen Gleichspannungsschaltgerät" beschrieben und auf welche somit hinsichtlich der diesbezüglichen Offenbarung Bezug genommen wird. Dabei ist unter dem Begriff "Differenz", wie er im Rahmen der vorliegenden Beschreibung und der Ansprüche verwendet wird, die betragsmäßige Differenz zu verstehen.

Die Erfindung wird nachfolgend unter Bezugnahme auf die beigefügten Zeichnungen anhand bevorzugter Ausführungsbeispiele detaillierter beschrieben, woraus sich weitere Merkmale und Vorteile der Erfindung zeigen. In den Zeichnungen zeigen:
- Fig. 1: stark vereinfacht eine erste bevorzugte Ausführungsform eines Gleichspannungsschaltgerätes nach der Erfindung,
- Fig. 2: stark vereinfacht eine zweite bevorzugte Ausführungsform eines Gleichspannungsschaltgerätes nach der Erfindung,
- Fig. 3: stark vereinfacht eine weitere bevorzugte Ausführungsform eines ersten Schaltelements, welches aus zwei antiseriell geschalteten elektronisch steuerbaren Schalteinheiten aufgebaut ist,
- Fig. 4: stark vereinfacht einen DC-Bus mit Plus- und Minusleiter als Gleichspannungsquelle mit zwei DC-Abzweigen, die mittels Gleichspannungsschaltgeräten gemäß der Erfindung an den DC-Bus gekoppelt werden können, und
- Fig. 5: stark vereinfacht ein Schaltbild eines Schaltsystems nach der Erfindung mit einem Gleichspannungsschaltgerät und gleichgerichtetem dreiphasigem AC-Netz als Gleichspannungsquelle auf der Eingangsseite und angeschlossener Gleichspannungslast auf der Ausgangsseite sowie mit angedeutetem Erdschluss von PE zur Minusleitung am Geräteausgang.

Nachfolgend wird die Erfindung unter Bezugnahme auf die beigefügten Zeichnungen anhand bevorzugter Ausführungsbeispiele detaillierter beschrieben.

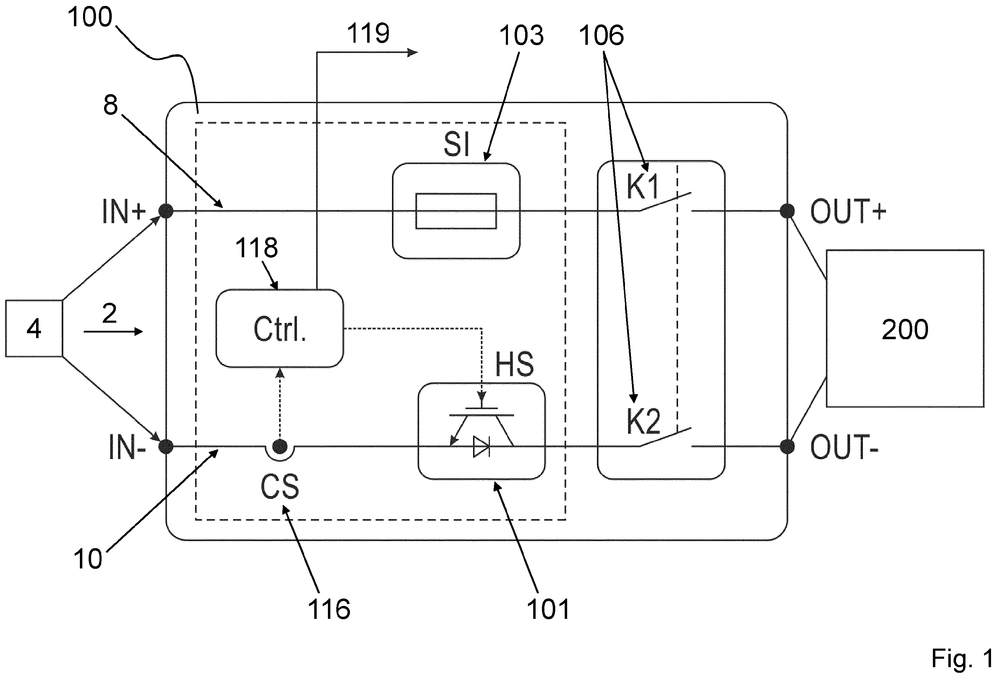

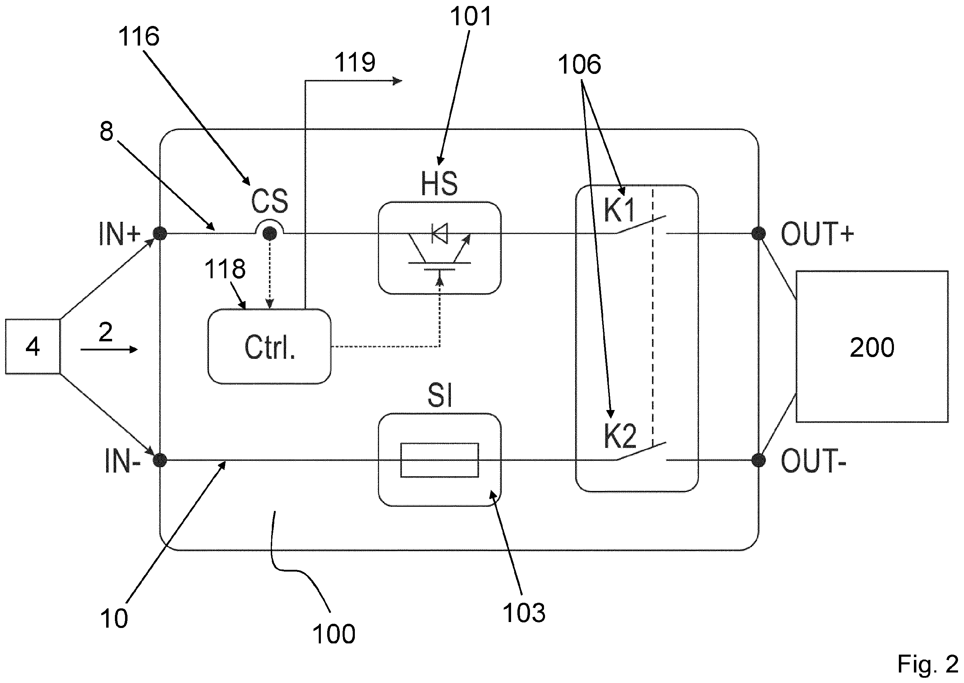

In den Fign. 1 und 2 sind stark vereinfacht eine erste bzw. eine zweite bevorzugte Ausführungsform eines Gleichspannungsschaltgerätes nach der Erfindung gezeigt. Im Einzelnen ist bei den Fign. 1 und 2 jeweils ein Gleichspannungsschaltgerät 100 dargestellt, welches zum Koppeln einer Gleichspannungslast 200 über einen Plusleiter 8 und Minusleiter 10 an eine Gleichspannungsquelle 4 eingerichtet. Der Plusleiter 8 und der Minusleiter 10 sind hierbei jeweils durch das Gleichspannungsschaltgerät 100 geführt. Mittels des Gleichspannungsschaltgeräts 100 wird quasi ein Gleichspannungsabzweig 2 zwischen der Gleichspannungsquelle 4 und der Gleichspannungslast 200 eingerichtet. Die Plus- und Minusleiter 8, 10 können hierbei auch auf einer Leiterplatte angeordnet sein, d.h. insbesondere als Leiterbahnen ausgebildet sein. Das Gleichspannungsschaltgerät 100 umfasst, d.h. beinhaltet ein erstes Schaltelement 101 zum Ankoppeln und Abkoppeln der Gleichspannungslast 200, welches ein in den Plusleiter 8 oder in den Minusleiter 10 integriertes, halbleiterbasiertes, elektronisch steuerbares Schaltelement ist; und eine in dem jeweils anderen Leiter integrierte Sicherung 103. Bei Fig. 1 ist das zusätzlich mit "HS" markierte halbleiterbasierte, elektronisch steuerbare Schaltelement in den Plusleiter 8 integriert und bei Fig. 2 in den Minusleiter 10. Entsprechend ist bei Fig. 1 eine zusätzlich mit "SI" markierte Sicherung 103 in den Minusleiter 10 und bei Fig. 2 in den Plusleiter integriert.

Ferner umfasst das Gleichspannungsschaltgerät 100 einen Sensor 116, der zumindest zum Erfassen des Stromflusses des Leiters, in welchem das erste Schaltelement 101 integriert ist; eingerichtet ist. In den Fign. 1 und 2 besitzt der Sensor 116 hierzu gemäß einer zweckmäßigen Ausbildung jeweils ein in Serie mit dem ersten Schaltelement 101 angeordnetes Sensorelement zum Erfassen des Stromflusses, d.h. des Stromflusses desjenigen Leiters, in welchen auch das ersten Schaltelement 101 integriert ist. Das diesen Stromfluss erfassende Sensorelement ist hierbei zusätzlich mit "CS" markiert.

Eine mit dem Sensor 116 und dem ersten Schaltelement 101 verbundene, zusätzlich in den Fign. 1 und 2 mit "Ctrl" markierte Auswertevorrichtung 118 des Gleichspannungsschaltgeräts 100 ist schließlich eingerichtet, den erfassten Stromfluss gegenüber einem Schwellwert zu vergleichen und das erste Schaltelements 101 zum Abkoppeln der Gleichspannungslast 200 bei Durchschreiten des Schwellwertes entsprechend anzusteuern. Das halbleiterbasierte Schaltelement 101 wird folglich ausgeschaltet und die Gleichspannungslast 200 ist in Folge zumindest elektrisch abgekoppelt und kann nicht mehr über die Gleichspannungsquelle 4 betrieben werden. Zumindest das erste Schaltelement 101, die Sicherung 103 und die Auswerteeinrichtung 118 können hierbei in einem gemeinsamen Gehäuseeinheit Gleichspannungsschaltgeräts 100 enthalten sein, wie bei Fig. 1 mit der gestrichelt dargestellten Umrandung angedeutet und insbesondere die Sicherung 103 kann ferner ergänzend oder alternativ auswechselbar im Gleichspannungsschaltgerät 100 enthalten. Sein, sodass diese bei "Zerstörung" auf einfache Weise Austauschbar ist.

Folglich gewährleistet das Gleichspannungsschaltgerät 100 gemäß Erfindung insbesondere auch bei Netzformen, bei denen das Erdpotential PE nicht von den aktiven Leitern isoliert ist, bei einem Erdschluss die Trennung des Fehlerorts vom Rest des Netzes und es bietet die Möglichkeit, sowohl im Pluszweig 8 als auch im Minuszweig 10 eine Möglichkeit den Fehler sicher zu trennen.

Das für das betriebliche Schalten in der Regel ohnehin benötigte steuerbare Halbleiterschaltelement in einem der Leiter, d.h. im Plus- oder Minusleiter, kann in wenigen µs abschalten und somit die Gleichspannungsquelle 4 vom Fehlerort trennen bevor der Strom zu groß wird. Somit wird als erstes Schaltelement zweckmäßig auch dieses Halbleiterschaltelement für den Erdschlussschutz für diesen Leiter verwendet, so dass die Trennung sehr schnell, d.h. insbesondere innerhalb weniger µs erfolgen kann und der abzuschaltende Strom nicht zu hoch wird. Der in Bezug auf diesen Leiter erfasste Stromfluss wird durch die Auswertevorrichtung 118, welche z.B. einen µC (Mikrocontroller) oder Komparator-Schaltung beinhalten kann, ausgewertet und steuert das erste Schaltelement 101, d.h. das Halbleiterelement, zum Abkoppeln der Gleichspannungslast bei Durchschreiten eines Schwellwertes entsprechend an, d.h. schaltet dieses ab. Zusammen bilden das erste Schaltelement 101, der Sensor 116 und die Auswertevorrichtung 118 den Erdschlussschutz für den entsprechenden Leiter.

In dem anderen Leiter wird hingegen die Sicherung 103 zum Erdschlussschutz verwendet. Sicherungen mit ausreichender Kurzschlussfestigkeit, die somit gegebenenfalls zwar langsamer reagieren, aber sehr hohe Ströme (z.B. auch mehrere 10kA) sicher abschalten können, sind verfügbar. Von Vorteil ist, dass kein weiteres Halbleiterschaltelement benötigt wird und folglich auch nicht zwingend ein Sensor zum Erfassen des Stromflusses des Leiters, in den die Sicherung integriert ist. Auch eine diesbezügliche Auswertung und Ansteuerung ist für diesen Leiter nicht zwingend notwendig. Des Weiteren ist die Verlustleistung der Sicherung wesentlich geringer, weshalb eine aufwendige Kühlung, wie sie für in der Regel für ein Halbleiterschaltelement benötigt wird, entfällt. Für das betriebliche Schalten bedarf es ohnehin kein zusätzliches steuerbares Halbleiterschaltelement im zweiten Leiter. Entsprechend ergeben sich auch Kostenvorteile durch die Verwendung einer Sicherung.

In Abwandlung zu den in den Fig. 1 und 2 dargestellten Ausführungsformen könnte jedoch auch das in Serie mit dem ersten Schaltelement 101 angeordnete Sensorelement 116 entfallen, und der Stromfluss des Leiters, in welchem das erste Schaltelement 101 integriert ist mittels einer auf andere Weise entsprechend angeordneten und eingerichteten Sensorik erfasst werden.

Eine zweckmäßige Möglichkeit gemäß der Erfindung ergänzend oder alternativ zu einem in Serie mit dem ersten Schaltelement 101 angeordneten Sensorelement den Stromfluss des Leiters zu erfassen, in welchen auch das erste Schaltelement 101 integriert ist, besteht darin, den Stromfluss beider Leiter mittels eines entsprechend angeordneten und eingerichteten Sensors zu erfassen, d.h. insbesondere einen den Differenzstrom oder Summenstrom aus Plus- und Minusleiter bildenden Stromflusses zu erfassen. Wie eingangs definiert, ist unter dem Begriff "Differenz", wie er im Rahmen der vorliegenden Beschreibung und der Ansprüche verwendet wird, die betragsmäßige Differenz zu verstehen. Gibt es keinen Fehlerstrom, d.h. insbesondere keinen Stromfluss zum Erdpotential im Gleichspannungsabzweig, dann sind die Beträge der Ströme im Plusleiter und Minusleiter im optimalen Fall gleich groß, d.h. Summe der Ströme ist gleich Null bzw. die betragsmäßige Differenz ist gleich Null. Folglich kann im Falle eines Erdschlusses auch mittels eines solchen Sensors ein Stromfluss des Leiters, in welchem das erste Schaltelement 101 integriert ist, in jedem Fall (mit-)erfasst werden.

Hierzu kann gemäß bevorzugter Ausbildung die Erfassung eines solchen Stromflusses durch Erfassen eines sich insgesamt um den Plusleiter 8 und Minusleiter 10 herum ausbildenden Magnetfeldes erfolgen. Hierzu kann insbesondere ein Sensor mit einem Hall-Effekt-Sensorelement ausgestatteter Sensor eingesetzt werden. Für eine einfach zu realisierende Erfassung des sich insgesamt um diese Leiter herum ausbildenden Magnetfeldes können dann beispielsweise ferner der Plusleiter 8 und der Minusleiter 10 durch eine gemeinsame Durchgangsöffnung eines im Gleichspannungsschaltgerät enthaltenen Ferritkerns geführt sein, der bevorzugt an einer Stelle aufgetrennt ist und in dem dort folglich gebildeten Luftspalt den Sensor beherbergt. Mit Hilfe eines solchen Ferritkerns können die magnetischen Feldlinien somit zweckmäßig gebündelt und geführt werden. Aus Gründen der Übersichtlichkeit ist diese zweckmäßige Möglichkeit in den Figuren nicht näher dargestellt, jedoch wird hierzu die Offenbarung der von der Anmelderin vorliegender Anmeldung am 5. Juli 2021 bei der belgischen Anmeldebehörde eingereichten Anmeldung Nr. BE2021/5520 mit dem Titel "Fehlerstromüberwachung für einen Gleichspannungsschaltgerät" in Bezug genommen.

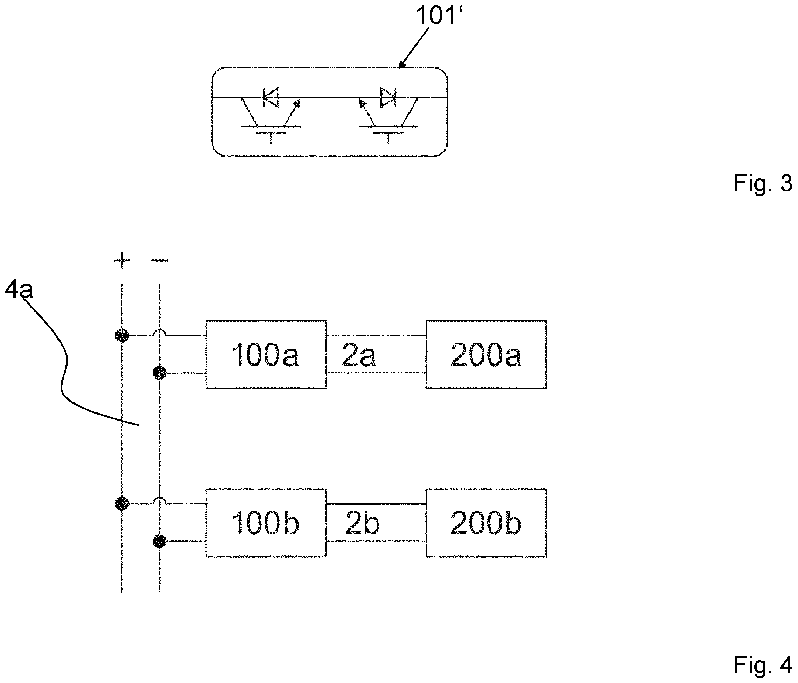

Wie bei Fig. 3 stark vereinfacht dargestellt, kann in Abwandlung zu den Fign. 1 und 2 auch ein erstes Schaltelement 101' eingesetzt werden, welches zwei antiseriell geschaltete elektronisch steuerbare Schalteinheiten umfasst. Im Fall eines solchen antiserieller Aufbaus, d.h. insbesondere als bidirektionaler Schalter, ist grundsätzlich auch ein Betrieb der Gleichspannungslast, d.h. der hierfür nötige Stromfluss mit entsprechenden Anschluss an die Gleichspannungsquelle, auch bidirektional möglich und für die Begrenzung eines jeweiligen Stromflusses in die eine oder andere Richtung kann jeweils einer der antiseriell geschalteten Dioden des Halbleiterelements Sorge tragen.

Die Auswertevorrichtung 118 kann zur Auswertung des erfassten Stromflusses, d.h. insbesondere zum Vergleichen des erfassten Magnetfeldes gegenüber einem Schwellwert und zum Aktivieren des zumindest einen Schaltelements 101 eine analoge Schaltung, eine diskrete Schaltung oder bevorzugt auch einen µC (Mikrocontroller) besitzen. Überschreitet oder Unterschreitet je nach Ausführung und/oder Anwendungsgebiet der Stromfluss einen insbesondere vorher festgelegten Schwellenwert, so wird das Schaltelement, d.h. z.B. das gemäß Fig. 1 gezeigte Schaltelement 101 zum Abkoppeln der Last 200 von der Quelle 4 entsprechend aktiviert, d.h. insbesondere abgeschaltet. Das Schaltelement zum Ankoppeln und Abkoppeln der Gleichspannungslast 200 kann ergänzend jedoch auch ein zweites und ein drittes Schaltelement 106 umfassen, insbesondere ein zweites und drittes elektromechanisches Schaltelement, wobei eines von dem zweiten und dritten Schaltelement 106 in den Plusleiter 8 und das andere in den Minusleiter 10 integriert ist. Hierdurch kann, insbesondere gleichermaßen mittels der Auswertevorrichtung 118 auch eine galvanische Entkopplung der Last 200 von der Quelle 4 bewirkt werden. Hierzu kann das zweite und dritte Schaltelement 106 folglich Relaiskontakte besitzen, bei den Fign. 1 und 2 zusätzlich mit K1 bzw. K2 markiert. Für ein schnelles Abschalten sind jedoch solche Relaiskontakte jedoch ungeeignet, da die Zeit bis zur Trennung im ms-Bereich liegt.

Durchschreitet folglich der erfasste und mittels der Auswerteeinrichtung 118 ausgewertete Stromfluss einen vorher festgelegten kritischen Wert, so kann je nach durchschrittenen Wert und spezieller Ausbildung das erste Schaltelement 101 oder ergänzend auch das zweite sowie dritte Schaltelement 106 durch die Auswertungsvorrichtung 118 abgeschaltet und damit der Gleichspannungsabzweig elektrisch bzw. galvanisch von der Gleichspannungsquelle 4 entkoppelt. Ferner wird durch das Abschalten des zweiten sowie dritten Schaltelements 106 der Stromfluss in beide Richtungen verhindert, wohingegen beim Abschalten nur des ersten Schaltelements 101 der Stromfluss nur in eine Stromflussrichtung unterbunden wird,. Durch das zweite sowie dritte Schaltelement 106 erfolgt somit stets eine sichere galvanische Trennung des DC-Ausgangs vom DC-Eingang. Die Auswertevorrichtung 118 ist ferner bevorzugt dazu eingerichtet, zumindest zum Abschalten des ersten Schaltelements 101 bei Durchschreiten einer durch den Schwellwert vorgegebenen Stromflussänderungsgeschwindigkeit, Stromamplitude und/oder Stromrichtung zu berücksichtigen. Mit anderen Worten kann alternativ oder ergänzend insbesondere zur Stromamplitude auch die Stromflussänderungsgeschwindigkeit und/oder die Stromrichtung mit einem Schwellwert verglichen werden und bei Durchschreiten zum Abschalten des ersten Schaltelements (101) führen. Zweckmäßig erfolgt bei einer Auswertung gengenüber einem Schwellwert insbesondere neben einem Vergleich der Stromamplitude auch ein Vergleich der Stromflussänderungsgeschwindigkeit und/oder der Stromrichtung und führt bei Durchschreiten des Schwellwertes zum Abschalten.

Die Auswertevorrichtung 118 besitzt hierbei ferner in zweckmäßiger Weiterbildung einen Meldeausgang oder eine Kommunikationsschnittstelle, und zwar zum Ausgeben 119 eines Meldesignals, wenn der Schwellwert durchschritten wird und/oder wenn der Schwellwert zwar nicht durchschritten wird, aber der erfasste Stromfluss einen betragsmäßig größeren Wert aufweist als ein gegenüber dem Schwellwert betragsmäßig kleinerer zweiter Schwellwert. Somit können über den Vergleich mit einem Schwellwert in äußerst zweckmäßiger Weise z.B. auch tolerierbare Stromänderungen, schwankungen und/oder -verluste beim Betreiben der Gleichspannungslast auf vielfältige und flexible Art und Weise mitberücksichtigt werden.

Zweckmäßig ist die Auswertungsvorrichtung 118 ferner nicht nur ausgebildet und eingerichtet, das Entkoppeln der Gleichspannungslast 200 bzw. den ganzen Gleichspannungsabzweig 2 elektrisch oder ergänzend auch galvanisch von der Gleichspannungsquelle 4 mittels entsprechenden Aktivierungsbefehlen an das Schaltelement oder die Schaltelemente, d.h. zu dessen bzw. deren Ausschalten, zu bewirken sondern auch das elektrisch und/oder galvanische Ankoppeln der Gleichspannungslast 200 bzw. des ganzen Gleichspannungsabzweiges 2 an die Gleichspannungsquelle 4 mittels entsprechenden Aktivierungsbefehlen an das Schaltelement oder die Schaltelemente, d.h. zu dessen bzw. deren Einschalten, zu bewirken. Insbesondere ein Befehl an die Auswertungsvorrichtung 118 zum hierauf basierten Bewirken des Einschaltens kann gemäß zweckmäßiger Ausführung von der Auswertungsvorrichtung 118 beispielsweise auch über eine wie vorbeschriebene Kommunikationsschnittstelle oder über eine andere Eingangsschnittstelle, insbesondere einen digitalen Eingang, entgegengenommen werden.

Mit einem wie vorstehend in diversen Ausführungsvarianten beschriebenen Gleichspannungsschaltgerät lässt sich folglich ferner insbesondere ein Schaltsystem umsetzen, bei welchem an einem Eingang IN+, IN- des Gleichspannungsschaltgerätes 100 der Plusleiter 8 und der Minusleiter 10 an die Gleichspannungsquelle 4 angeschlossen sind und an einem Ausgang OUT+, OUT- des Gleichspannungsschaltgerätes 100 über den Plusleiter 8 und den Minusleiter 10 ein Gleichspannungszweig mit der Gleichspannungslast 200 an- und abkoppelbar ist (vgl. Fig. 1).

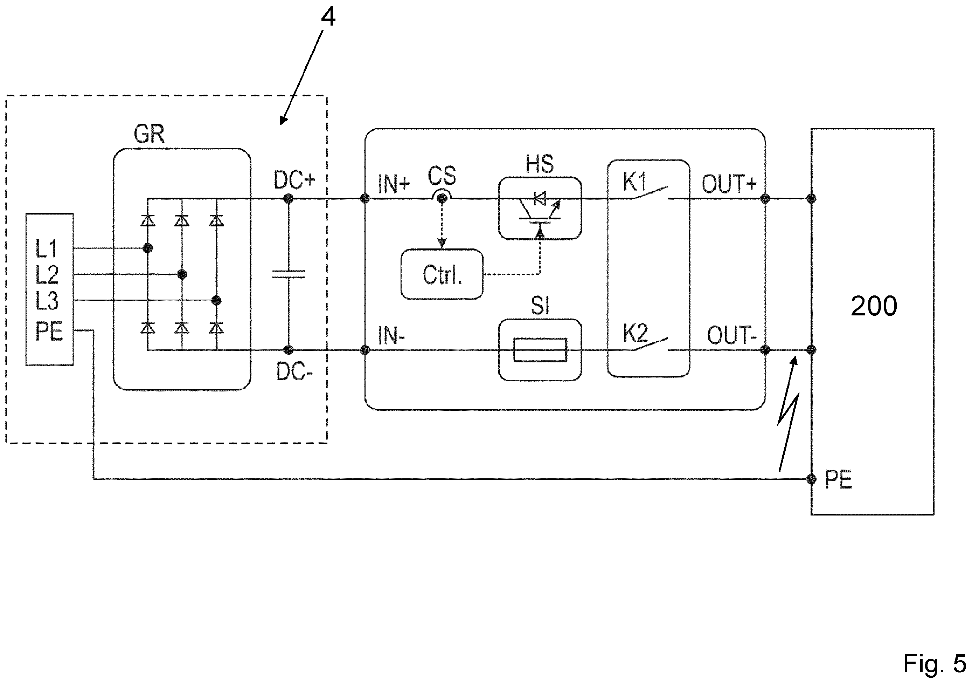

In der Regel wird die Gleichspannung der Gleichspannungsquelle 4 üblicherweise aus einem dreiphasigen AC-Netz mit L1, L2, L3 mittels einer Gleichrichtung GR erzeugt, wobei die Gleichrichtung aktiv mit einer Leistungselektronischen Schaltung oder passiv mit Dioden erfolgen kann. Fig. 5 zeigt hierzu stark vereinfacht ein Schaltbild eines Schaltsystems nach der Erfindung mit einem Gleichspannungsschaltgerät und gleichgerichtetem dreiphasigem AC-Netz als Gleichspannungsquelle 4 auf der Eingangsseite IN+, IN- und angeschlossener Gleichspannungslast 200 auf der Ausgangsseite OUT+, OUT- sowie mit angedeutetem Erdschluss von PE zur Minusleitung am Geräteausgang.

In Fig. 4 ist hierauf basierend stark vereinfacht ein bevorzugtes Schaltsystem skizziert, welches ein erstes solches Gleichspannungsschaltgerät 100a einen Eingang und einen Ausgang besitzt, wobei der Plusleiter und der Minusleiter 10 Eingang jedoch an einen Gleichspannungsbus 4a als Gleichspannungsquelle angeschlossen sind und am Ausgang über den Plusleiter und den Minusleiter ein Gleichspannungszweig 2a mit einer Gleichspannungslast 200a an- und abkoppelbar ist.

In zweckmäßiger Weiterbildung ist gemäß Fig. 2 ferner zumindest ein weiteres solches Gleichspannungsschaltgerät 100b mit einem Eingang und einen Ausgang umfasst, wobei auch bei diesem weiteren Gleichspannungsschaltgerät 100b der Plusleiter 8 und der Minusleiter 10 gleichermaßen am Eingang an den Gleichspannungsbus 4a angeschlossen sind und am Ausgang über den Plusleiter 8 und den Minusleiter 10 ein weiterer Gleichspannungszweig 2b mit einer Gleichspannungslast 200b an- und abkoppelbar ist.

Unter Würdigung vorstehender Beschreibung muss die Gleichspannungslast keine einzelne Last sein, sondern kann sich aus einer Gruppe von Gleichspannungslasten zusammensetzen oder als ein Gleichstromnetz ausgebildet sein, mit einer Vielzahl von darüber betriebenen Gleichspannungslasten.

Zum schnellen Entkoppeln der Gleichspannungslast oder des Gleichspannungsabzweigs von der Gleichspannungsquelle, insbesondere einem Gleichspannungsbus eignet sich in praktischer Umsetzung für das halbleiterbasierte, elektronisch steuerbare Schaltelement 101 z.B. ein MOSFET ("metal-oxide-semiconductor field-effect transistor") oder IGBT ("Insulated Gate Bipolar Transistor").

Mittels der vorbeschriebenen Auswertevorrichtung 118 lässt sich folglich anwendungsspezifisch und/oder je nach spezifischer Ausführung insbesondere
- eine Ladestrombegrenzung angeschlossener Gleichspannungslasten realisieren, d.h. ein Vorladen von Zwischenkreiskondensatoren der angeschlossenen Lasten auf das Eingangsspannungsniveau,
- eine Überwachung verschiedener Zustandsgrößen, wie z.B. der Eingangsspannung, der Ausgangsspannung, des Laststroms, und von Ableitströmen gegen PE (Fehlerstrom),
- ein Abschalten im Fehlerfall, d.h. sobald eine Zustandsgröße den zulässigen Bereich verlässt.
- eine Fehlerstromabschaltung, d.h. ein Abschalten, wenn die Differenz der Ströme in Plus- und Minusleiter zu groß wird, und/oder
- eine schnelle Abschaltung bei einem Kurzschluss auf der Ausgangsseite.

### Bezugszeichenliste

- 2, 2a, 2b: Gleichspannungszweig
- 4: Gleichspannungsquelle
- 4a: Gleichspannungsbus
- 8: Positivleiter
- 10: Negativleiter
- 100, 100a, 100b: Gleichspannungsschaltgerät
- 101, 101': erstes Schaltelement
- 103: Sicherung
- 106: zweites, drittes Schaltelement
- 116: Sensor
- 118: Auswertevorrichtung
- 119: Ausgabe von Meldeausgang oder Kommunikationsschnittstelle
- 200, 200a, 200b: Gleichspannungslast

## Patentansprüche

1. Gleichspannungsschaltgerät (100) zum Koppeln einer Gleichspannungslast (200) über einen Plusleiter (8) und Minusleiter (10) an eine Gleichspannungsquelle (4), wobei der Plusleiter (8) und der Minusleiter (10) durch das Gleichspannungsschaltgerät (100) geführt sind, umfassend:
- ein erstes Schaltelement (101, 101') zum Ankoppeln und Abkoppeln der Gleichspannungslast (200), welches ein in den Plusleiter (8) oder in den Minusleiter (10) integriertes, halbleiterbasiertes, elektronisch steuerbares Schaltelement ist;
- eine in dem jeweils anderen Leiter integrierte Sicherung (103);
- einen Sensor (116), zumindest zum Erfassen des Stromflusses des Leiters, in welchem das erste Schaltelement (101) integriert ist; und
- eine mit dem Sensor (116) und dem ersten Schaltelement (101) verbundene Auswertevorrichtung (118), **dadurch gekennzeichnet, dass** die Auswertevorrichtung (118) eingerichtet ist zum Vergleichen des erfassten Stromflusses gegenüber einem Schwellwert und zum Ansteuern des ersten Schaltelements (101, 101') zum Abkoppeln der Gleichspannungslast bei Durchschreiten des Schwellwertes.

2. Gleichspannungsschaltgerät (100) nach Anspruch 1, wobei der Sensor (116) ein in Serie mit dem ersten Schaltelement (101) angeordnetes Sensorelement zum Erfassen des Stromflusses besitzt.

3. Gleichspannungsschaltgerät (100) nach einem der Ansprüche 1 oder 2, wobei der Sensor (116) zum Erfassen des Stromflusses beider Leiter angeordnet und eingerichtet ist, insbesondere zum Erfassen eines den Differenzstrom oder Summenstrom aus Plus- und Minusleiter bildenden Stromflusses angeordnet und eingerichtet ist.

4. Gleichspannungsschaltgerät (100) nach einem der Ansprüche 1 bis 3, umfassend ein zweites und drittes Schaltelement (106) zum Ankoppeln und Abkoppeln der Gleichspannungslast (200), insbesondere ein zweites und drittes elektromechanisches Schaltelement, wobei eines von dem zweiten und dritten Schaltelement (106) in den Plusleiter (8) und das andere in den Minusleiter (10) integriert ist.

5. Gleichspannungsschaltgerät (100) nach einem der Ansprüche 1 bis 4, wobei das erste Schaltelement (101') zwei antiseriell geschaltete, elektronisch steuerbare Schalteinheiten umfasst.

6. Gleichspannungsschaltgerät (100) nach einem der Ansprüche 1 bis 5,
wobei zumindest das erste Schaltelement (101, 101'), die Sicherung (103) und die Auswerteeinrichtung (118) in einem gemeinsamen Gehäuseeinheit enthalten sind.

7. Gleichspannungsschaltgerät (100) nach einem der Ansprüche 1 bis 6, wobei der Plusleiter (8) und der Minusleiter (10) als Leiterbahnen auf einer Platine ausgeführt sind.

8. Gleichspannungsschaltgerät (100) nach einem der Ansprüche 1 bis 7, wobei die Auswertevorrichtung (118) eingerichtet ist, neben der Stromamplitude auch die Stromflussänderungsgeschwindigkeit und/oder Stromrichtung mit einem Schwellwert zu vergleichen und bei Überschreiten das Abschalten des ersten Schaltelements (101) zu bewirken.

9. Schaltsystem mit einem Gleichspannungsschaltgerät (100) nach einem der der Ansprüche 1 bis 7, wobei das Gleichspannungsschaltgerät (100) einen Eingang und einen Ausgang besitzt, wobei der Plusleiter (8) und der Minusleiter (10) am Eingang an einen Gleichspannungsbus als Gleichspannungsquelle (4) angeschlossen ist und am Ausgang über den Plusleiter (8) und den Minusleiter (10) ein Gleichspannungszweig mit mindestens einen Gleichspannungslast an- und abkoppelbar ist.

## Claims

1. Direct voltage switching device (100) for coupling a direct voltage load (200) via a positive conductor (8) and negative conductor (10) to a direct voltage source (4), the positive conductor (8) and the negative conductor (10) being routed through the direct voltage switching device (100), comprising:
- a first switching element (101, 101') for coupling and decoupling the direct voltage load (200), which is a semiconductor-based, electronically controllable switching element integrated in the positive conductor (8) or in the negative conductor (10);
- a fuse (103) integrated in the respective other conductor;
- a sensor (116), at least for detecting the current flow of the conductor in which the first switching element (101) is integrated; and
- an evaluation device (118) connected to the sensor (116) and the first switching element (101),
**characterized in that**,
the evaluation device (118) is set up to compare the detected current flow with respect to a threshold value and to trigger the first switching element (101, 101') in order to disconnect the direct voltage load when the threshold value is passed.

2. Direct voltage switching device (100) according to claim 1,
wherein the sensor (116) has a sensor element arranged in series with the first switching element (101) for detecting the current flow.

3. Direct voltage switching device (100) according to one of claims 1 or 2,
wherein the sensor (116) is arranged and set up for detecting the current flow of both conductors, in particular is arranged and set up for detecting a current flow forming the differential current or sum current of positive and negative conductors.

4. Direct voltage switching device (100) according to any one of claims 1 to 3, comprising a second and third switching element (106) for coupling and decoupling the direct voltage load (200), in particular a second and third electromechanical switching element, wherein one of the second and third switching element (106) is integrated in the positive conductor (8) and the other is integrated in the negative conductor (10).

5. Direct voltage switching device (100) according to any one of claims 1 to 4,
wherein the first switching element (101') comprises two antiserially switched, electronically controllable switching units.

6. Direct voltage switching device (100) according to one of claims 1 to 5,
wherein at least the first switching element (101, 101'), the fuse (103) and the evaluation device (118) are contained in a common housing unit.

7. Direct voltage switching device (100) according to one of claims 1 to 6,
wherein the positive conductor (8) and the negative conductor (10) are designed as conductor tracks on a circuit board.

8. Direct voltage switching device (100) according to one of claims 1 to 7,
wherein the evaluation device (118) is set up to compare not only the current amplitude but also the current flow rate of change and/or current direction with a threshold value and to cause the first switching element (101) to be switched off if this is exceeded.

9. Switching system with a direct voltage switching device (100) according to one of claims 1 to 7, wherein the direct voltage switching device (100) has an input and an output, wherein the positive conductor (8) and the negative conductor (10) are connected at the input to a direct voltage bus as a direct voltage source (4) and a direct voltage branch with at least one direct voltage load can be connected and disconnected at the output via the positive conductor (8) and the negative conductor (10).

## Revendications

1. Appareil de commutation à tension continue (100) permettant de coupler une charge de tension continue (200) à une source de tension continue (4) par l'intermédiaire d'un conducteur positif (8) et d'un conducteur négatif (10), dans lequel le conducteur positif (8) et le conducteur négatif (10) sont guidés à travers l'appareil de commutation à tension continue (100), comprenant :
- un premier élément de commutation (101, 101') permettant de coupler et de découpler la charge de tension continue (200), lequel élément est un élément de commutation à commande électronique, à base de semi-conducteurs, intégré dans le conducteur positif (8) ou dans le conducteur négatif (10) ;
- un fusible (103) intégré dans l'autre conducteur respectif ;
- un capteur (116), permettant au moins de détecter le flux de courant du conducteur dans lequel est intégré le premier élément de commutation (101) ; et
- un dispositif d'évaluation (118) relié au capteur (116) et au premier élément de commutation (101), **caractérisé en ce que** le dispositif d'évaluation (118) est conçu pour comparer le flux de courant détecté à une valeur seuil et pour amener le premier élément de commutation (101, 101') à découpler la charge de tension continue lorsque la valeur seuil est franchie.

2. Appareil de commutation à tension continue (100) selon la revendication 1, dans lequel le capteur (116) possède un élément de capteur agencé en série avec le premier élément de commutation (101) pour détecter le flux de courant.

3. Appareil de commutation à tension continue (100) selon l'une des revendications 1 ou 2, dans lequel le capteur (116) est agencé et conçu pour détecter le flux de courant des deux conducteurs, en particulier est agencé et conçu pour détecter un flux de courant formant le courant différentiel ou le courant cumulé des conducteurs positif et négatif.

4. Appareil de commutation à tension continue (100) selon l'une des revendications 1 à 3, comprenant un deuxième et un troisième élément de commutation (106) permettant de coupler et découpler la charge de tension continue (200), en particulier un deuxième et un troisième élément de commutation électromécanique, dans lequel l'un parmi le deuxième et le troisième élément de commutation (106) est intégré dans le conducteur positif (8) et l'autre dans le conducteur négatif (10).

5. Appareil de commutation à tension continue (100) selon l'une des revendications 1 à 4, dans lequel le premier élément de commutation (101') comprend deux unités de commutation à commande électronique branchées selon un montage antisérie.

6. Appareil de commutation à tension continue (100) selon l'une des revendications 1 à 5, dans lequel au moins le premier élément de commutation (101, 101'), le fusible (103) et le dispositif d'évaluation (118) sont contenus dans un ensemble boîtier commun.

7. Appareil de commutation à tension continue (100) selon l'une des revendications 1 à 6, dans lequel le conducteur positif (8) et le conducteur négatif (10) sont réalisés sous forme de pistes conductrices sur un circuit imprimé.

8. Appareil de commutation à tension continue (100) selon l'une des revendications 1 à 7, dans lequel le dispositif d'évaluation (118) est conçu pour comparer, outre l'ampleur de courant, également la vitesse de variation du flux de courant et/ou la direction de courant à une valeur seuil et, en cas de dépassement, provoquer la coupure du premier élément de commutation (101).

9. Système de commutation comportant un appareil de commutation à tension continue (100) selon l'une des revendications 1 à 7, dans lequel l'appareil de commutation à tension continue (100) possède une entrée et une sortie, dans lequel le conducteur positif (8) et le conducteur négatif (10) sont branchés à l'entrée à un bus de tension continue sous forme de source de tension continue (4) et une branche de tension continue comportant au moins une charge de tension continue peut être couplée et découplée à la sortie par l'intermédiaire du conducteur positif (8) et du conducteur négatif (10).
